# EUROPEAN PATENT SPECIFICATION

(11) **EP 3 090 945 B1**
(45) Date of publication and mention of the grant of the patent: **18.04.2018**
(21) Application number: 15166221.0
(22) Date of filing: 04.05.2015
(51) Int. Cl.: B64C 29/00, B64C 39/08, B64C 3/38

(54) **A FLYING APPARATUS**
FLIEGENDE VORRICHTUNG
ENGIN VOLANT

(43) Date of publication of application: 09.11.2016
(73) Proprietor: Shchukin, Anton Alexandrovich, 3021 Limassol (CY)
(72) Inventor: Shchukin, Anton Alexandrovich, 3021 Limassol (CY)
(74) Representative: Sloboshanin, Sergej

(56) References cited:
- DE-A1- 10 041 030
- US-A- 1 891 166
- US-A1- 2003 080 242
- US-A1- 2005 230 519
- US-A1- 2010 301 168
- US-A1- 2011 001 020

## Description

The invention relates to aviation technology and can be used for civil purposes of transportation of people and freights, as well as for agricultural and fire-fighting purposes and for solving military strike tasks, reconnaissance tasks, tasks of air defense and for providing air superiority.

The object of the invention is an aircraft with high maneuverability and the capability of flying in any direction at any attitude of the fuselage due to the presence of lifting aerodynamic surfaces, each of which can independently rotate around the axis of attachment to the fuselage and each of which has a propulsor mounted thereon that generates a thrust in the plane of the aerodynamic surface.

Known are aerodynamic designs of aircrafts "Normal", "Canard", "Tailless", "Flying wing".

To disadvantages of aircrafts of such designs can be referred significant losses in balancing in horizontal flights, or large energy losses when performing maneuvers and limited possibilities in changing its attitude in space. One way to improve the capabilities of aircrafts of such designs is the introduction of a thrust vector control, as applied for example in the air-fighter SU30-MKI, however the uncommon for conventional aircrafts change of the aircraft's attitude in space is possible only as result of a short-term dynamic maneuver.

There are also various designs providing for improved flying characteristics and performance of specific tasks. So, on guided air-to-air missiles for fast and energy-efficient maneuvers in plane without changing the direction in space is used the "Triplane" design, where on the fuselage in front of and behind the center of pressure are positioned simultaneously deflectable guiding surfaces. An interesting technical solution is the design "convertiplane" applied in the aircraft V-22 "Osprey", developed in the USA for the landing of marines. On the lifting aerodynamic surfaces of this aircraft are installed engines with propellers which generate thrust in the plane of the aerodynamic surfaces. If vertical landing is necessary, the planes of the convertiplane rotate around their axes for 90°, so that the aircraft obtains the possibility to hover or to land on a small unprepared surface area.

Examples of prior art are provided by US 2011/001020, DE 100 41 030, US 1 891 166, US 2005/230519, US 2003/080242 and US 2010/301168.

The task of the proposed invention is the creation of an aircraft that combines the advantages of a convertiplane and various aerodynamic designs, providing for a greater flight range with minimal losses in balancing and achieving the highest degree of freedom in space when maneuvering, including turns during motion and on the spot for 360°, random turns of the body in the plane of symmetry with respect to the direction of the motion of the aircraft, not excluding movement of the stern forward.

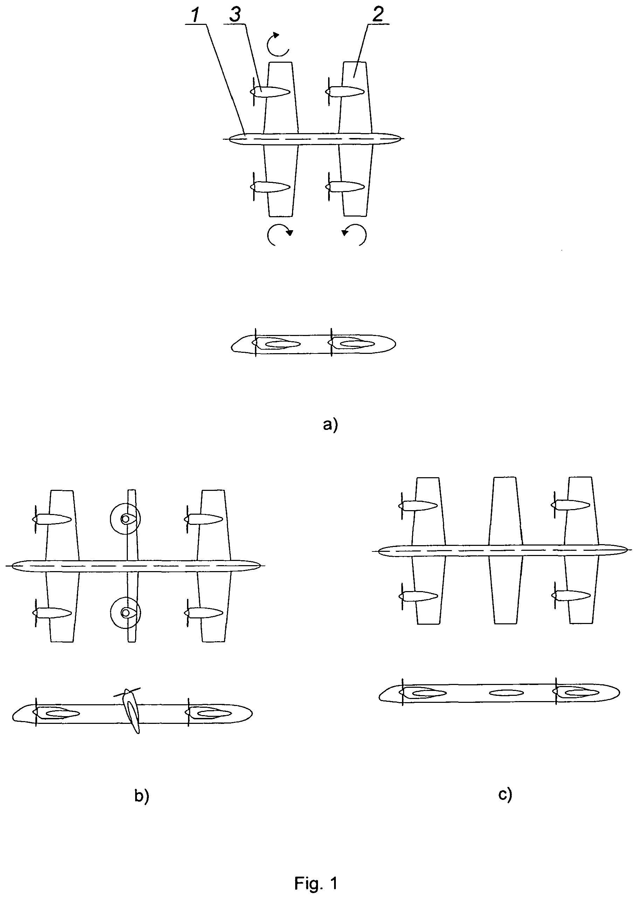

The specified technical result in the proposed apparatus is achieved by using six independently rotatable around the axis of attachment to the fuselage aerodynamic surfaces with a propulsor mounted on each of the aerodynamic surfaces, the propulsor generating a thrust in the plane of the aerodynamic surface. The aircraft of the invention is fully disclosed in claim 1. The new combination of components enables due to:
- the fuselage, - providing for the placement of useful loads, power units, fuel tanks or elements, auxiliary devices, systems and mechanisms of various functionality, and to serve as a support structure for axes of rotatable bearing surfaces for performing particular maneuvers ;
- the propulsors generating thrust - generating thrust being one of the types of engines - propeller (reciprocating, electric), turboprop, turbojet - placed on aerodynamic surfaces;
- the aerodynamic bearing surfaces - providing for an aerodynamic lifting force for the aircraft, while containing propulsors generating thrust in their planes; Fig. 1 shows one example useful for understanding the invention.

The aircraft (Fig. 1, a) consists of a fuselage 1, propulsors generating thrust 3, aerodynamic surfaces 2 placed in a horizontal plane perpendicular to the plane of symmetry of the aircraft.

The drawing (Fig. 1, b, c) shows variants of the proposed aircraft, comprising additional rotating surfaces as well as additional surfaces fixed in relation to the fuselage, intended for the generation of an additional lifting force in a cruise flight as well as for stabilization. The aircraft of the invention is represented in Fig. 1, b.

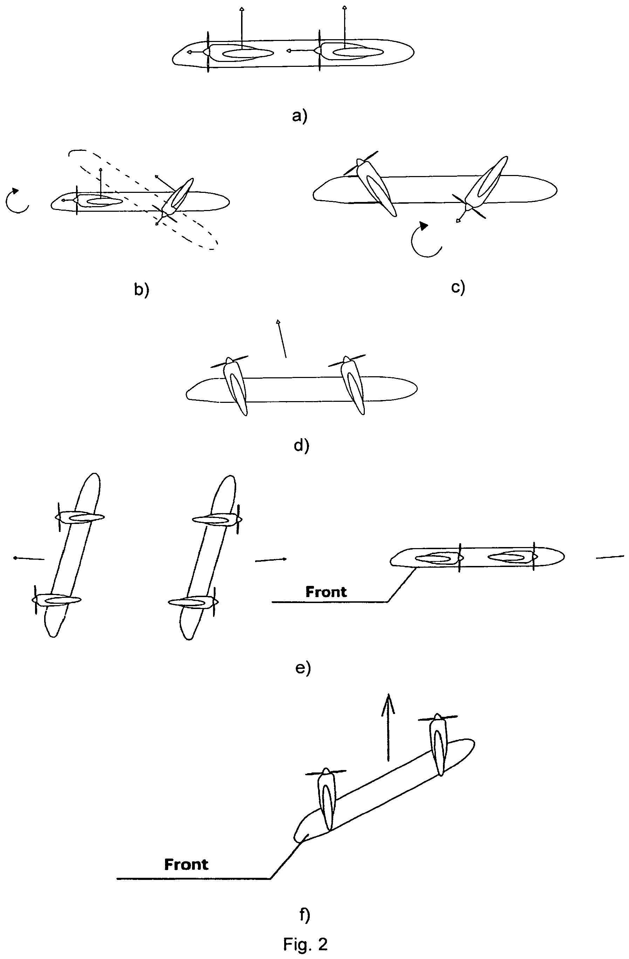

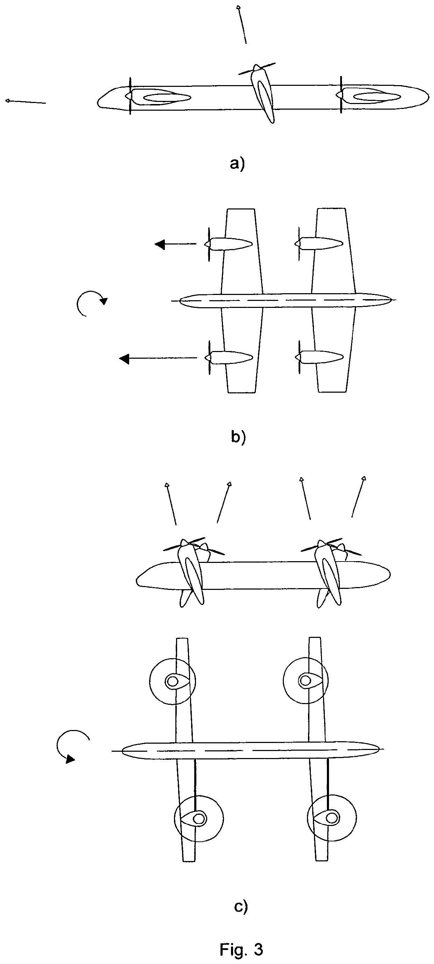

The main advantages of such a design are explained in the drawings, presented in the figure (Fig. 2).
In a horizontal flight (Fig. 2, a) the aerodynamic surfaces generate a lifting force directed vertically, and the thrust devices generate a force directed horizontally in the direction of the flight. In this configuration the consumption of fuel is minimum, so that this mode of operation is intended for the maximum range. If it is necessary to gain altitude one can act by changing the angle of attack of the front or rear pairs of aerodynamic surfaces, as shown in the drawings (Fig. 2, b), so that the fuselage will be also forced to change the angle of attack. When the front and rear surfaces are deflected at the same time, the mode of supermaneuverability is reached (Fig. 2, c). If it is necessary to increase the altitude without changing the angle of attack of the fuselage or by changing it to a specified value, which is necessary for example at special conditions of transportation of freight or passengers, or at tasks of accompanying ground or air targets, can be achieved by changing the angle of attacks of both pairs of surfaces, as shown in the drawings (Fig. 2, d). In a similar way it is possible to implement vertical climbing with horizontally located fuselage, as well as a horizontal flight with vertically located fuselage or even a flight with the stern forwardly (Fig. 2, e). Furthermore, it is possible to provide for hovering of the aircraft with a random pitch angle (Fig. 2, f).
The increase in numbers of aerodynamic surfaces, as per claim 1, adds new possibilities. So adding surfaces in the horizontal plane can provide for the aircraft to have a combined flight mode, shown in the drawing (Fig. 3, a).
Using power control of the propulsors generating thrust can provide for the turn on the spot and during movement of the fuselage in horizontal plane and vertical plane (Fig. 3, b).
A turn on the spot can also be implemented by deflecting the propulsers generating thrusts in the vertical plane to different sides (Fig. 3, c).
Therefore, the proposed invention allows providing an aircraft with the ability of flying with any attitude of the fuselage in the plane of symmetry regarding the direction of motion. When locating the aerodynamic surfaces in the horizontal plane provided for is a horizontal flight with minimal losses in balancing at a long range, and when they are rotated simultaneously the mode of supermaneuverability is provided. A turn on the spot can be implemented by deflecting the propulsors generating thrusts in the vertical plane to different sides. When controlling the power of the propulsors generating thrust the aircraft is capable to perform a turn of the fuselage on the spot and during movement in the horizontal plane and vertical plane.

## Claims

1. A tailless aircraft comprising:
- a fuselage,
- six equal aerodynamic surfaces attached to the fuselage, three on each side of the fuselage, with a propulsor fixedly mounted
on each of the aerodynamic surfaces, wherein the propulsors generate a thrust in a plane of the aerodynamic surface, wherein all aerodynamic surfaces of the aircraft are placed in the same horizontal plane perpendicular to the plane of symmetry of the aircraft and are adapted to rotate independently of each other around an axis of attachment to the fuselage, wherein a power of each of the propulsors is regulated separately, and wherein the aircraft is controlled
- by turning the aerodynamic surfaces around the axis of attachment to the fuselage to an angle determined separately for each of the aerodynamic surfaces, and
- by separately controlling the thrust of the propulsors in such a way that varying the angle of the aerodynamic surface leads to performing a particular maneuver including a supermaneuverability and turns around on a spot, or, turning the aerodynamic surfaces in one direction provides a flight ability of the aircraft with any attitude of the fuselage in the plane of symmetry with respect to the direction of the flight as well as
adjusting the power of the propulsors provides turns of the fuselage on a spot and during the flight in horizontal and vertical plane, additionally providing a combined flight mode of the aircraft, the aircraft being adapted to implement also a flight with the stern forwardly.

## Patentansprüche

1. Schwanzloses Flugzeug, umfassend:
- einen Rumpf,
- sechs gleiche aerodynamische Flächen, die an dem Rumpf befestigt sind, drei an jeder Seite des Rumpfs, mit einem Antrieb, der fest an jeder der aerodynamischen Flächen angebracht ist,
- wobei die Antriebe einen Schub in einer Ebene der aerodynamischen Fläche erzeugen;
wobei alle aerodynamischen Flächen des Flugzeugs in derselben horizontalen Ebene senkrecht zu der Symmetrieebene des Flugzeugs angeordnet und dafür ausgelegt sind, unabhängig voneinander um eine Befestigungsachse an dem Rumpf zu drehen,
wobei eine Leistung jedes der Antriebe separat geregelt wird, und
wobei das Flugzeug gesteuert wird
- indem die aerodynamischen Flächen um die Befestigungsachse an dem Rumpf in einem Winkel, der für jede der aerodynamischen Flächen separat bestimmt wird, gedreht werden, und
- indem der Schub der Antriebe separat so gesteuert wird, dass
∘ eine Änderung des Winkels der aerodynamischen Fläche dazu führt, dass ein bestimmtes Manöver einschließlich einer Supermanövrierbarkeit und das Drehen auf einem Punkt durchgeführt wird, oder
∘ dass das Drehen der aerodynamischen Flächen in einer Richtung eine Flugfähigkeit des Flugzeugs bei beliebiger Position des Rumpfs in der Symmetrieebene bezüglich der Flugrichtung bewirkt, sowie
∘ dass eine Anpassung der Leistung der Antriebe das Drehen des Rumpfs auf einem Punkt und während des Flugs in der horizontalen und der vertikalen Ebene bewirkt,
wobei zusätzlich ein kombinierter Flugmodus des Flugzeugs vorgesehen ist, wobei das Flugzeug dafür ausgelegt ist, dass es auch mit dem Heck nach vorn fliegen kann.

## Revendications

1. Avion sans queue comprenant :
- un fuselage,
- six surfaces aérodynamiques égales fixées au fuselage, trois sur chaque côté du fuselage, avec un propulseur monté de manière fixe sur chacune des surfaces aérodynamiques,
dans lequel les propulseurs génèrent une poussée dans un plan de la surface aérodynamique,
dans lequel toutes les surfaces aérodynamiques de l'avion sont placées dans le même plan horizontal perpendiculaire au plan de symétrie de l'avion et sont adaptées pour entrer en rotation indépendamment les unes des autres autour d'un axe de fixation au fuselage,
dans lequel une puissance de chacun des propulseurs est régulée séparément, et
dans lequel l'avion est commandé
- en faisant tourner les surfaces aérodynamiques autour de l'axe de fixation au fuselage selon un angle déterminé séparément pour chacune des surfaces aérodynamiques, et
- en commandant séparément la poussée des propulseurs de telle manière que la variation de l'angle de la surface aérodynamique conduit à effectuer une manoeuvre particulière comportant une super-manoeuvrabilité et des tours sur un point, ou faire tourner les surfaces aérodynamiques dans une direction fournit une capacité à voler de l'avion avec une quelconque attitude du fuselage dans le plan de symétrie par rapport à la direction du vol ainsi que l'ajustement de la puissance des propulseurs fournit des tours du fuselage sur un point et pendant le vol dans le plan horizontal et le plan vertical, et fournissant en outre un mode de vol combiné de l'avion, l'avion étant adapté pour également mettre en oeuvre un vol avec l'arrière vers l'avant.
